# EUROPÄISCHE PATENTANMELDUNG

(11) **EP 3 847 880 A1**
(43) Veröffentlichungstag der Anmeldung: **14.07.2021**
(21) Anmeldenummer: 21401000.1
(22) Anmeldetag: 07.01.2021
(51) Int. Cl.: A01C 17/00, A01C 15/12

(54) **LANDWIRTSCHAFTLICHE VERTEILMASCHINE**

(30) Priorität: 10.01.2020 DE 102020100394
(71) Anmelder: Amazonen-Werke H. Dreyer SE & Co. KG, 49205 Hasbergen (DE)
(72) Erfinder: Bäumker, Herbert, 49176 Hilter (DE)

(57) **Zusammenfassung**

Landwirtschaftliche Verteilmaschine (10) zum Ausbringen von Streumittel (11) mit zumindest einem Steuer- und/oder Regelsystem (S) zum Steuern und/oder Regeln der landwirtschaftlichen Verteilmaschine (10) umfassend zumindest einen Vorratsbehälter (12) zur Bevorratung des Streumittels (11), zumindest eine einstellbare Dosiereinrichtung (13) die im unteren Bereich des Vorratsbehälters (12) antreibbar angeordnet und dazu eingerichtet ist, dass bevorratete Streumittel (11) mit wenigstens zwei unterschiedlichen Geschwindigkeiten durch wenigstens eine Austrittsöffnung (14) die in dem Vorratsbehälter (12) angeordnet ist, aus dem Vorratsbehälter (12) zumindest einer Streueinheit (15) zuzuführen, und zumindest ein verstellbares Dosier- und/oder Absperrelement (20) das der zumindest einen Austrittsöffnung (14) zugeordnet ist und dazu eingerichtet ist, einen Austrittsquerschnitt der Austrittsöffnung (14) einzustellen, wobei die Position des zumindest einen Dosier- und/oder Absperrelementes (20) mittels zumindest einer Sensoreinrichtung (30) erfassbar ist. Um eine Verteilmaschine (10) so zu gestalten, dass sie für einen Bediener besonders einfach einstellbar ist, ist vorgesehen, dass zumindest eine Voreinstellung auf dem zumindest einen Steuer- und/oder Regelsystem (S) hinterlegbar und in Abhängigkeit der Position des Dosier- und/oder Absperrelementes (20), vorzugsweise automatisiert, abrufbar ist.

## Beschreibung

Die Erfindung betrifft eine landwirtschaftliche Verteilmaschine gemäß dem Oberbegriff des Patentanspruches 1.

In einer Vielzahl von Anwendungsfällen, insbesondere in der Landwirtschaft, werden Verteilmaschinen zum Ausbringen von Streumittel, insbesondere Saatgut, Dünger und/oder Kalk, auf einer landwirtschaftlichen Fläche eingesetzt. Die Verteilmaschinen sind hierbei mittels eines Fahrzeugs ziehbar und/oder an einem solchen anbaubar ausgeführt. Darüber hinaus sind als Großflächenstreuer ausgebildete Verteilmaschinen bekannt, die vorzugsweise zumindest einen langgestreckten Vorratsbehälter zur Bevorratung des Streumittels umfassen. Das Streumittel ist hierbei über zumindest eine einstellbare Dosiereinrichtung, die vorzugsweise als Transportband ausgebildet ist, durch zumindest eine an dem Vorratsbehälter angeordnete Austrittsöffnung zumindest einer Streueinheit, insbesondere rotatorisch antreibbaren Streuscheibe, zuführbar. Das Streumittel ist dabei nach Art eines Zentrifugalprinzips über die Streueinheit auf der landwirtschaftlichen Fläche, vorzugsweise in einem zumindest im Wesentlichen gleichmäßigen Streubild, ausbringbar.

Gattungsgemäße Verteilmaschinen weisen des Weiteren zumindest ein manuell und/oder automatisiert verstellbares Dosier- und/oder Absperrelement, insbesondere ein Schieberblech, auf das dazu eingerichtet ist, einen Austrittsquerschnitt der Austrittsöffnung und damit die mittels der Dosiereinrichtung aus dem Vorratsbehälter geförderte Menge an Streumittel zumindest teilweise zu beeinflussen.

Darüber hinaus sind den Verteilmaschinen zugeordnete Steuer- und/oder Regelsysteme bekannt mittels derer Einstellungen der Verteilmaschine in Abhängigkeit unterschiedlicher Parameter, beispielweise Eigenschaften des Streumittels und/oder Arbeitsbreite der Verteilmaschine, hinterlegbar und/oder abrufbar sind.

Eine derartige Verteilmaschine mit einem Steuer- und/oder Regelsystem ist in der DE 40 16 595 C2 beschrieben. Die Verteilmaschine umfasst neben zumindest einem Vorratsbehälter zumindest eine mit wenigstens zwei Geschwindigkeiten antreibbare und im unteren Bereich des Vorratsbehälters angeordnete Dosiereinrichtung, die insbesondere als Transportband ausgebildet ist. Das Streumittel, insbesondere der Dünger und/oder Kalk, ist hierbei aus dem Vorratsbehälter mittels der Dosiereinrichtung über zumindest eine an dem Vorratsbehälter angeordnete Austrittsöffnung einer Streueinheit, insbesondere einer rotatorisch antreibbaren Streuscheibe, zuführbar. Darüber hinaus ist der Austrittsöffnung zumindest ein verstellbares Dosier- und/oder Absperrelement zugeordnet, über das der Austrittsquerschnitt der zumindest einen Austrittsöffnung einstellbar ist. Somit ist die zur Streueinheit geförderte Menge an Streumittel neben der Geschwindigkeit der Dosiereinrichtung außerdem von der Position des Dosier- und/oder Absperrelements beeinflussbar. Die Position des Dosier- und/oder Absperrelementes ist hierbei mittels zumindest einer Sensoreinrichtung erfassbar.

Nachteilig an diesem Aufbau ist unter anderem, dass die Einstellungen der Verteilmaschine, insbesondere zu Beginn eines Ausbringvorgangs, zumindest nahezu ausschließlich manuell von einem Bediener einstellbar sind. Dies erfordert neben einer Bestimmung, insbesondere Berechnung, der erforderlichen Position des Dosier- und/oder Absperrelements, für eine jeweilige Ausbringmenge des Streumittels, außerdem weitere von dem auszubringenden Streumittel abhängige Einstellungen, wie beispielsweise die Dichte und/oder das Schüttgewicht. Hierbei ist vom Bediener außerdem die an der Verteilmaschine anbringbare Streueinheit, insbesondere Streuscheibe, und die damit zusammenhängende minimale und/oder maximale zu erreichende Arbeitsbreite zu berücksichtigen und/oder einzustellen. Bedingt durch die Tatsache, dass eine hohe Anzahl an Einstellungen, insbesondere zu Beginn des Ausbringvorgangs, an der Verteilmaschine vorzunehmen sind, resultiert hieraus ein besonders großes Fehlerpotential bei der Eingabe.

Die der Erfindung zugrunde liegende Aufgabe besteht somit darin, eine Verteilmaschine so zu gestalten, dass sie für einen Bediener besonders einfach einstellbar ist.

Diese Aufgabe wird erfindungsgemäß dadurch gelöst, dass zumindest eine Voreinstellung auf dem zumindest einen Steuer- und/oder Regelsystem hinterlegbar und in Abhängigkeit der Position des Dosier- und/oder Absperrelementes, vorzugsweise automatisiert, abrufbar ist.

Infolge dieser Maßnahme ist erreicht, dass zumindest eine Einstellung der Verteilmaschine, vorzugsweise automatisiert, mittels des Steuer- und/oder Regelsystems in Abhängigkeit einer Konfiguration der Verteilmaschine abrufbar ist. Die Position des Dosier- und/oder Absperrelementes ist hierbei bevorzugt zwischen einer zumindest nahezu vollständig geschlossenen und geöffneten Stellung außerdem in zumindest einer weiteren Zwischenstellung verbringbar. Eine vollständig geöffnete Stellung bedeutet hierbei eine vollständig geöffnete Austrittsöffnung mit maximalem Austrittsquerschnitt zum Fördern des Streumittels aus dem Vorratsbehälter. Bei einer vollständig geschlossenen Stellung ist die Austrittsöffnung zumindest nahezu vollständig durch das Dosier- und/oder Absperrelement versperrt, so dass zumindest nahezu kein Streumittel aus dem Vorratsbehälter förderbar ist. Bei einer Zwischenstellung des Dosier- und/oder Absperrelementes ist die Austrittsöffnung, insbesondere der Austrittsquerschnitt, zumindest teilweise mittels des Dosier- und/oder Absperrelementes versperrt, wobei das Streumittel zumindest teilweise aus dem Vorratsbehälter zu der zumindest einen Streueinheit, insbesondere Streuscheibe, förderbar ist. Alternativ oder zusätzlich ist das Dosier- und/oder Absperrelement, insbesondere bei vollständig geöffneter Austrittsöffnung, um zumindest eine im Wesentlichen horizontale Achse zumindest teilweise verschwenkbar. Dies ist in besonderer Weise für die Ausbringung von Streumittel, wie beispielsweise Kalk, geeignet. Alternativ oder zusätzlich ist das Dosier- und/oder Absperrelement außerdem zumindest nahezu vollständig von der Verteilmaschine demontierbar und/oder durch zumindest ein weiteres Dosier- und/oder Absperrelement ersetzbar.

Die Position, insbesondere die Höhe über der Dosiereinrichtung, des zumindest einen Dosier- und/oder Absperrelementes ist mittels zumindest einer Sensoreinrichtung erfassbar.

Die von einem Bediener, vorzugsweise manuell, auswählbare, insbesondere einstellbare, Position des Dosier- und/oder Absperrelementes ist bevorzugt zumindest teilweise von der auszubringenden Streumittelmenge und/oder der an der Verteilmaschine angeordneten Streueinheit, insbesondere Streuscheibe, abhängig. Mittels des Steuer- und/oder Regelsystems ist die zumindest eine Voreinstellung abrufbar. Hierbei ist zumindest eine Einstellung auf der Basis der abrufbaren Voreinstellung, vorzugsweise automatisiert, einstellbar und/oder für einen Bediener, insbesondere mittels eines Anzeige- und/oder Eingabemittels, darstellbar. Bei einer manuell ausgebildeten Voreinstellung ist die zumindest eine abrufbare und/oder darstellbare Voreinstellung von dem Bediener zur Einstellung der Verteilmaschine zumindest teilweise annehmbar und/oder anpassbar.

Die zumindest eine Voreinstellung ist alternativ oder zusätzlich über eine drahtlose Schnittstelle des Steuer- und/oder Regelsystems von einer zentralen Rechnereinheit und/oder bevorzugt durch ein dem Bediener zugeordneten Mobielteil zur Verteilmaschine, insbesondere zum Steuerungs- und/oder Regelsystem, übertragbrar. Alternativ oder zusätzlich ist die zumindest eine Voreinstellung durch eine manuelle Eingabe seitens des Bedieners auf dem Steuerungs- und/oder Regelsystem und/oder der Verteilmaschine, insbesondere einer zugeordneten Speichereinheit, hinterlegbar.

Die zumindest eine Voreinstellung ist bevorzugt zumindest einem jeweiligen Modus, der einer jeweiligen Konfiguration der Verteilmaschine zugewiesen ist, zuordenbar. Ein Modus stellt hierbei eine Reihe von zumindest teilweise vorgegebenen Einstellungen der Verteilmaschine dar, die auf variablen Einstellungen, insbesondere Konfigurationen, der Verteilmaschine abgestimmt sind. Erfindungsgemäß sind Voreinstellungen betreffend die Drehzahl der zumindest einen Streueinheit, insbesondere Streuscheibe, und/oder die Dosiermenge des Streumittels das zur Streueinheit förderbar ist und/oder die Arbeitsbreite, insbesondere Wurfweite, der Verteilmaschine besonders geeignet, wobei weitere Einstellungen und/oder Parameter der Verteilmaschine wie beispielsweise die optimale Fahrgeschwindigkeit und/oder die Wurfrichtung des Streumittels ebenfalls denkbar sind.

Umfasst die Verteilmaschine alternativ oder zusätzlich ein, vorzugsweise verstellbares, Übergabesystem, wie beispielsweise eine Rutsche und/oder einen Trichter, das zwischen der Dosiereinrichtung und der Streueinheit, insbesondere Streuscheibe, angeordnet ist, kann der Aufgabepunkt des Streumittels auf der Streueinheit, insbesondere Streuscheibe, ebenfalls als geeignete Voreinstellung dienen.

Infolge der erfindungsgemäßen Ausführungsform ist die Verteilmaschine für einen Bediener besonders einfach und/oder mit geringem Zeitaufwand einstellbar.

In einer bevorzugten Ausführungsform der erfindungsgemäßen Verteilmaschine ist zumindest eine Einstellung der landwirtschaftlichen Verteilmaschine in Abhängigkeit der zumindest einen Voreinstellung, vorzugsweise automatisiert, einstellbar und/oder steuerbar. Bevorzugt ist zumindest eine Einstellung der Maschine in einem Bereich zwischen zwei Werten, insbesondere einem minimalen und maximalen Wert, auswählbar. In erster Linie erfordert dies eine manuelle Eingabe, insbesondere mittels einem Anzeige- und/oder Eingabemittel, beispielweise einem mobilen Bedienterminal, durch einen Bediener. Alternativ oder zusätzlich kann die Einstellung und/oder Steuerung automatisiert durch das Steuer- und/oder Regelsystem erfolgen. Als zumindest teilweise vorgegebene Einstellung, insbesondere in Abhängigkeit der Position des Dosier- und/oder Absperrelementes, sind die Ausbringmenge des Streumittels und/oder die erforderliche Arbeitsbreite besonders gut geeignet. Hierbei ist für die Dosierung der Ausbringmenge neben der einstellbaren Position des Dosier- und/oder Absperrelementes außerdem die Geschwindigkeit der Dosiereinrichtung, insbesondere des Transportbandes, und/oder der Verteilmaschine über der landwirtschaftlichen Fläche von entscheidender Bedeutung. Auf zumindest nahezu alle Einstellung der Verteilmaschine ist die Art, sind insbesondere die Eigenschaften, des Streumittels ausschlaggebend. Hierzu zählen beispielweise die Schüttdichte bzw. das Schüttgewicht und/oder die Aufprall- bzw.

Abwurfeigenschaften des Streumittels auf bzw. von der Streuscheibe. Notwendige Einstellbereiche der Verteilmaschine sind somit deutlich eingrenzbar und die Einstellung der Verteilmaschine stark vereinfacht. Darüber hinaus sind somit vom Steuer- und/oder Regelsystem geringere Berechnungen möglicher Variablen notwendig, womit die notwendige Rechenleistung des Steuer- und/oder Regelsystems besonders gering und/oder kostengünstig ist.

In einer Weiterbildung der erfindungsgemäßen Verteilmaschine ist zumindest eine Voreinstellung in Abhängigkeit der zumindest einen Streueinheit, insbesondere Streuscheibe, vorzugsweise automatisiert, abrufbar. Zusätzlich zur Position des Dosier- und/oder Absperrelementes ist die Streueinheit, insbesondere die Streuscheibe, von dem Steuer- und/oder Regelsystem der Verteilmaschine erfassbar und/oder berücksichtigbar. Die Erfassung der Streueinheit ist hierbei automatisiert und/oder manuell durch eine Eingabe des Bedieners in einem Anzeige- und/oder Eingabemittel realisierbar. Als zumindest teilweise voreingestellte Einstellung sind hierbei eine Vorauswahl eines bestimmten Wertes, insbesondere einer Arbeitsbreite, und/oder ein Bereich zwischen zumindest zwei Werten, insbesondere zwischen einer minimalen und einer maximalen Arbeitsbreite, die abhängig von der jeweiligen Streueinheit, insbesondere Streuscheibe, ist, besonders geeignet. Diese Voreinstellung ist vom Steuer- und/oder Regelsystem automatisiert, vorzugsweise unter Berücksichtigung zumindest einer weiteren Einstellung, abrufbar. Alternativ oder zusätzlich ist die zumindest eine Voreinstellung dem Bediener auf zumindest einem Anzeige- und/oder Eingabemittel, insbesondere optisch, vorschlagbar. Hierbei bieten sich in unterschiedliche Typen unterteilbare Streueinheiten, insbesondere Streuscheiben, besonders gut an. Darüber hinaus ist für den Bediener, insbesondere bei nicht montiertem bzw. fehlendem Dosier- und/oder Absperrelement an der Verteilmaschine, zumindest eine Fehlermeldung, vorzugsweise optisch und/oder akustisch, anzeigbar. Somit sind Fehler während der Einstellung und/oder im Betrieb der Verteilmaschine zumindest nahezu vollständig vermeidbar und/oder die Betriebssicherheit der Verteilmaschine deutlich gesteigert.

In einer anderen bevorzugten Ausführungsform der erfindungsgemäßen Verteilmaschine ist das zumindest eine Dosier- und/oder Absperrelement in zumindest zwei unterschiedlichen, vorzugsweise vordefinierten, Positionen montierbar. Das Dosier- und Absperrelement ist mittels einer form- und/oder kraftschlüssigen Verbindung an der Verteilmaschine, insbesondere in einer Förderrichtung hinter der Austrittsöffnung, anbringbar. Besonders bevorzugt ist ein mittels zumindest einer Schraubverbindung, vorzugsweise werkzeuglos, montierbares und/oder demontierbares Dosier- und/oder Absperrelement. Des Weiteren ist an dem Dosier- und/oder Absperrelement und/oder im Bereich des Vorratsbehälters zumindest eine, vorzugsweise in bestimmter Höhe über der Dosiereinrichtung, vordefiniertes Arretierungselement angeordnet. Das Dosier- und/oder Absperrelement ist somit mittels zumindest eines ersten Arretierungselementes an zumindest einem zweiten Arretierungselement an der Verteilmaschine, insbesondere im Bereich der Austrittsöffnung, koppelbar. Wobei unter und/oder über dem ersten und/oder zweiten Arretierungselement zumindest ein weiteres Arretierungselement an dem Dosier-und/oder Absperrelement angeordnet ist, so dass die jeweiligen Arretierungselemente in abweichenden Höhen, insbesondere zur Dosiervorrichtung, angeordnet sind. Die Einstellbarkeit und/oder Handhabbarkeit der Verteilmaschine, insbesondere des zumindest einen Dosier- und/oder Absperrelementes, ist somit für einen Bediener deutlich vereinfacht. Darüber hinaus ist somit durch eine besonders starke Eingrenzung möglicher Positionen des zumindest einen Dosier- und/oder Absperrelementes die notwendige Rechenleistung des Steuer- und/oder Regelsystems weiter reduzierbar und/oder somit besonders stark vereinfacht.

In einer anderen bevorzugten Ausführungsform ist das zumindest eine Dosier- und/oder Absperrelement zumindest teilweise als Lochblech ausgebildet. Hierbei umfasst das Dosier- und/oder Absperrelement vorzugsweise mehrere, insbesondere in vertikaler Richtung, angeordnete Ausschnitte. Mittels der Ausschnitte ist das Lochblech hierbei in unterschiedlichen Positionen, insbesondere Höhen über der Dosiereinrichtung, an zumindest einem Arretierungselement, das vorzugsweise an der Verteilmaschine angeordnet ist, anbringbar. Ein als Lochblech ausgebildetes Dosier- und/oder Absperrelement weist ein besonders geringes Eigengewicht auf und ist besonders einfach herstell- und/oder verarbeitbar. Somit ist die Handhabbarkeit des Dosier- und/oder Absperrelementes, insbesondere der Verteilmaschine, noch weiter gesteigert und/oder die Einstellung der Verteilmaschine besonders stark vereinfacht.

In einer anderen alternativen Ausführungsform ist das Dosier- und/oder Absperrelement zumindest teilweise als ein Schieber der in einer dazu zugeordneten Führung, insbesondere vertikal, verschiebbar ist ausgebildet. Die Höhe des Dosier- und/oder Absperrelementes ist hierbei manuell durch den Bediener und/oder motorisch vom Bediener über das Steuer- und/oder Regelsystem einstellbar. Somit ist das erreicht, dass die Höhe des zumindest einen Dosier- und/oder Absperrelementes und somit der Austrittquerschnitt der Austrittsöffnung beispielsweise aus der Fahrzeugkabine heraus durch den Bediener einstellbar ist, womit insbesondere der Komfort für den Bediener gesteigert ist.

Darüber hinaus ist das Dosier- und/oder Absperrelement, insbesondere in einer Zwischenstellung, dazu eingerichtet, das aus dem Vorratsbehälter geförderte Streumittel, insbesondere die Streumittelmenge, zumindest teilweise zu beeinflussen. Somit ist neben einer durch die Dosiereinrichtung, insbesondere das Transportband, eine mittels dem Dosier- und/oder Absperrelement realisierbare Ausbringmengensteuerung und/oder -regelung des Streumittels erreichbar.

In einer anderen Weiterbildung der erfindungsgemäßen Verteilmaschine umfasst die Sensoreinrichtung zumindest einen Positionsgeber, insbesondere Drehwinkelsensor. Die Sensoreinrichtung ist bevorzugt im Bereich der Austrittsöffnung und/oder des Dosier- und/oder Absperrelementes angeordnet und dazu eingerichtet, die Position, insbesondere Höhe, des Dosier- und/oder Absperrelementes zu erfassen. Die Sensoreinrichtung ist dabei direkt oder indirekt mit dem Dosier- und/oder Absperrelement koppelbar. Das mittels der Sensoreinrichtung erzeugbare Messsignal ist über zumindest eine Messsignalleitung und/oder drahtlose Verbindung, insbesondere Funk, an das Steuer- und/oder Regelsystem der Verteilmaschine übertragbar. Besonders bevorzugt ist eine Sensoreinrichtung die zumindest einen Drehwinkelsensor umfasst. Der Drehwinkelsensor erlaubt auf der einen Seite eine besonders genau Erfassung und auf der anderen Seite eine preisgünstige Ausführungsform der Sensoreinrichtung.

In einer weiteren bevorzugten Ausführungsform der erfindungsgemäßen Verteilmaschine ist dem zumindest einen Dosier- und/oder Absperrelement zumindest ein Bewegungswandler und der zumindest einen Sensoreinrichtung zumindest ein Führungsglied mit zumindest einer Führungsbahn zugeordnet, wobei der Bewegungswandler und das Führungsglied dazu eingerichtet sind, eine Translationsbewegung in eine Rotationsbewegung umzuwandeln. Das Führungsglied ist hierbei um zumindest eine Rotationsachse drehbar gelagert. Der zumindest eine Bewegungswandler ragt zumindest teilweise in die zumindest eine Führungsbahn des zumindest einen Führungsgliedes. Mittels der drehbaren Lagerung des Führungsgliedes ist bei einer im Wesentlichen translatorischen, insbesondere vertikalen, Verschiebung des Bewegungswandlers ein zumindest teilweise kreisbogenförmiger Bewegungsverlauf des Führungsgliedes, insbesondere einer der Lagerung abgewandten Seite des Führungsgliedes, ausführbar. Die Rotationsachse des Führungsgliedes ist dabei zumindest teilweise korrespondierend zur Rotationsachse der Sensoreinrichtung, insbesondere des Drehwinkelsensor, ausgebildet. Die Drehbewegung des Führungsgliedes ist somit mittels einer Kopplung zwischen dem Führungsglied und der Sensoreinrichtung übertragbar, wobei zumindest ein Messsignal in Abhängigkeit der Drehbewegung des Führungsgliedes von der Sensoreinrichtung generierbar ist. Mittels einer derartig ausgebildeten Zwangsführung des zumindest einen Bewegungswandlers innerhalb der zumindest einen Führungsbahn ist eine besonders betriebssichere und einfache Übertragung der Bewegung des Dosier- und/oder Absperrelementes auf die zumindest eine Sensoreinrichtung erreicht.

Bei einer alternativen Ausführungsform ist dem zumindest einen Dosier- und/oder Absperrelement zumindest ein Führungsglied mit zumindest einer Führungsbahn und der zumindest einen Sensoreinrichtung zumindest ein Bewegungswandler zugeordnet.

Darüber hinaus ist eine alternative Ausführungsform denkbar, bei der die Sensoreinrichtung zumindest ein mit dem Dosier- und/oder Absperrelement gekoppeltes Hebelelement umfasst, dass bevorzugt bei einer zumindest im Wesentlichen translatorischen Verschiebung und/oder Verstellung des Dosier- und/oder Absperrelementes eine zumindest teilweise kreisförmige Drehbewegung ausführt. Des Weiteren ist zwischen dem Dosier- und/oder Absperrelement und der Sensoreinrichtung eine Über- oder Untersetzung denkbar.

In einer weiteren Weiterbildung der erfindungsgemäßen Verteilmaschine ist die Geschwindigkeit der zumindest einen Dosiereinrichtung in Abhängigkeit der Position des zumindest einen Dosier- und/oder Absperrelementes, vorzugsweise automatisiert, steuer- und/oder regelbar. Die Dosiereinrichtung, insbesondere das Transportband, ist hierbei mittels zumindest einer Antriebseinheit mit zumindest zwei, vorzugsweise mehreren, Geschwindigkeiten antreibbar ausgebildet. Die Geschwindigkeit der Dosiereinrichtung, insbesondere des Transportbandes, ist bevorzugt zusätzlich von der Geschwindigkeit der Verteilmaschine abhängig. Darüber hinaus ist die Geschwindigkeit der Dosiereinrichtung bevorzugt in Abhängigkeit einer, vorzugsweise vom Bediener, festlegbaren Ausbringmenge des Streumittels und/oder Position des Dosier- und/oder Absperrelementes steuer- und/oder regelbar. Die Steuerung- und/oder Regelung ist hierbei bevorzugt automatisiert mittels dem Steuer- und/oder Regelsystem ausführbar, wobei alternativ oder zusätzlich eine manuelle Anpassung der Geschwindigkeit durch den Bediener denkbar ist. Der Bereich der Geschwindigkeit der zumindest einen Dosiereinrichtung ist somit noch weiter eingrenz- und/oder abstufbar. Bei einer automatisiert steuerbaren Ausbringmenge der Verteilmaschine sind somit insbesondere die Genauigkeit der Streumittelausbringung weiter gesteigert.

Bei einer besonders bevorzugten Ausführungsform ist die Ausbringmenge des Streumittels zumindest nahezu ausschließlich über die Geschwindigkeit der Dosiereinrichtung, insbesondere des Transportbandes, steuer- und/oder regelbar.

Besonders bevorzugt ist eine während des Ausbringvorgangs des Streumittels ausschließlich über die Dosiereinrichtung, insbesondere des Transportbandes, steuerbare und/oder regelbare Anpassung der Ausbringmengen.

Darüber hinaus ist eine erfindungsgemäße Verteilmaschine bevorzugt bei der die Geschwindigkeit der zumindest einen Dosiereinrichtung in Abhängigkeit der zumindest einen Streueinheit, vorzugsweise automatisiert, steuer- und/oder regelbar ist. Die Streueinheit umfasst hierbei bevorzugt zumindest eine, insbesondere wechselbare, Streuscheibe. Besonders bevorzugt sind einer Arbeitsbreite, insbesondere einem Bereich von minimaler und maximaler Arbeitsbreite, zuordenbare Streuscheiben. Die jeweiligen Streuscheiben, insbesondere Streuscheibengrößen und/oder Streuscheibenarten, sind hierbei bevorzugt in unterschiedliche Typen unterteilbar. Mittels einer der Verteilmaschine zugeordneten Erfassungseinrichtung ist die jeweilige Streueinheit, insbesondere der Typ der Streueinheit, die an der Verteilmaschine angeordnet ist, erkennbar und zumindest eine Voreinstellung unter Berücksichtigung der Streueinheit, insbesondere mittels des Steuer- und/oder Regelsystems, abrufbar und/oder einstellbar. Darüber hinaus ist die Verteilmaschine, insbesondere das Steuer- und/oder Regelsystem dazu eingerichtet, die Geschwindigkeit der Dosiereinrichtung, insbesondere des Transportbandes, unter der Berücksichtigung der erfassbaren Streueinheit, insbesondere während eines Ausbringvorgangs, zu steuern und/oder zu regeln. Die Geschwindigkeit der Dosiereinrichtung ist hierbei bevorzugt automatisiert, insbesondere zumindest annährend kontinuierlich, steuer- und/oder regelbar, wobei eine manuelle Steuerung durch den Bediener ebenfalls denkbar ist. Die Wahrscheinlichkeit von Fehlern während der Einstellung und/oder Bedienung der Verteilmaschine durch einen Bediener sind somit zumindest nahezu ausgeschlossen.

Darüber hinaus kann die Streueinheit zumindest eine weiteres, insbesondere in Förderrichtung hinter dem ersten Dosier- und/oder Absperrelement angeordnetes, Dosier- und/oder Absperrelement umfassen das beispielsweise als ein Doppelschieber ausgebildet ist. Hiermit ist eine noch weiter gesteigerte Ausbringmengenabstufung des Streumittels erreichbar. Alternativ oder zusätzlich ist außerdem zumindest eine, insbesondere in vertikaler Richtung zumindest teilweise unter der Dosiereinrichtung angeordnete, Trichter- und/oder Rutscheneinrichtung denkbar, die vorzugsweise vom Bediener berücksichtigbar und/oder vom Steuer- und/oder Regelsystem erfassbar ist.

Weitere Einzelheiten der Erfindung sind der Beispielsbeschreibung und den Zeichnungen zu entnehmen. Die Zeichnungen zeigen
- Fig.1: eine von einem Zufahrzeug gezogene landwirtschaftliche Verteilmaschine in einer perspektivischen Ansicht;
- Fig.2: ein erfindungsgemäßes Dosier- und/oder Absperrelement in einer ersten Stellung in detaillierten Ansicht von hinten;
- Fig.3: das Dosier-und/oder Absperrelement aus Fig. 2 in einer zweiten Stellung; und
- Fig.4: eine erfindungsgemäße Sensoreinrichtung in perspektivischer Detailansicht.

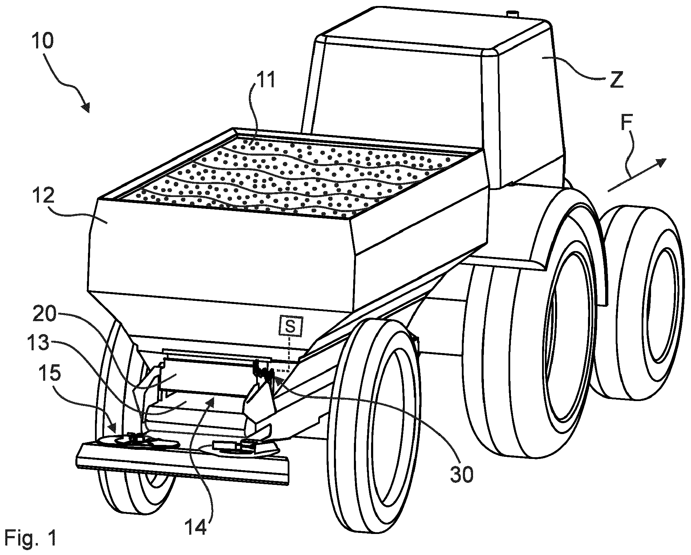

Eine landwirtschaftliche Verteilmaschine 10, die an ein Zugfahrzeug Z über eine nicht gezeigte Deichsel angekoppelt ist, ist in der Fig. 1 gezeigt. Die als Großflächenstreuer ausgebildete Verteilmaschine 10 umfasst zum Bevorrateten von Streumittel 11, insbesondere Dünger und/oder Kalk, einen Vorratsbehälter 12. Im unteren Bereich des Vorratsbehälters 12 ist eine als Transportband ausgebildete Dosiereinrichtung 13 angeordnet mittels der das Streumittel 11 in einstellbaren Mengen aus dem Vorratsbehälter 12 entgegen der Fahrtrichtung F hin zu einer Streueinheit 15 förderbar ist. Die Streueinheit 15 umfasst zwei um jeweils eine im Wesentlichen vertikale Achse rotatorisch antreibbare Streuscheiben, die in vertikaler Richtung unter der Dosiereinrichtung 13 angeordnet sind. Die Streueinheit 15 ist dazu eingerichtet, das auszubringende Streumittel 11 nach Art eines Zentrifugalprinzips in Form zumindest eines Streufächers auf einer landwirtschaftlichen Fläche zu verteilen.

Eine im hinteren Bereich des Vorratsbehälters 12 angeordnete Austrittsöffnung 14 bildet einen von einem Dosier- und/oder Absperrelement 20 abhängigen Austrittsquerschnitt über den das Streumittel 11 aus dem Vorratsbehälter 12 förderbar ist. Das Dosier- und/oder Absperrelement 20 ist der Austrittsöffnung 14 zugeordnet, wobei der Austrittsquerschnitt der Austrittsöffnung 14 über die Position des Dosier- und/oder Absperrelementes 20 einstellbar ist.

Die Position des Dosier- und/oder Absperrelementes 20 ist mittels einer dazu zugeordneten Sensoreinrichtung 30 und einem der Verteilmaschine 10 zugeordnetem Steuer- und/oder Regelsystem S erfassbar und/oder berücksichtigbar.

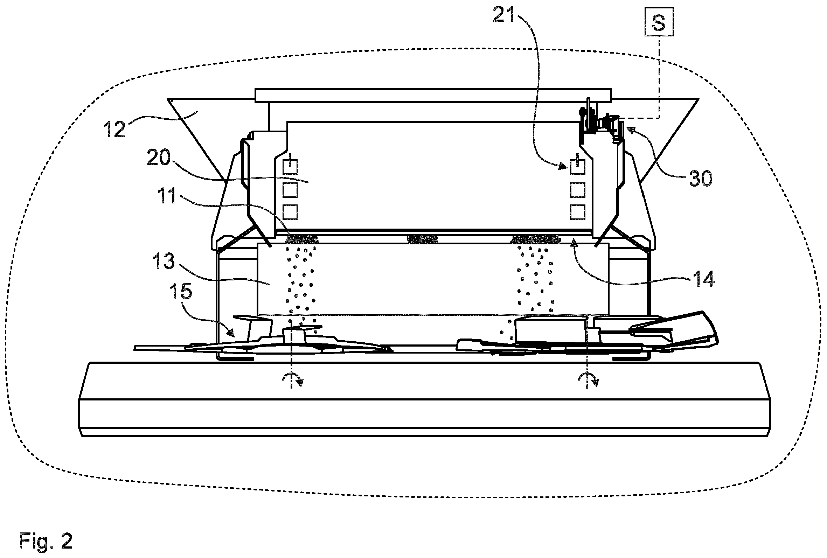

Die Fig. 2 zeigt das erfindungsgemäße Dosier- und/oder Absperrelement 20 in einer ersten Position, insbesondere in zumindest teilweiser geöffneter Stellung, über der Dosiereinrichtung 13 und/oder der Austrittsöffnung 14. Die Ausbringmenge des Streumittels 11 ist hierbei zumindest teilweise abhängig von der Position des Dosier- und/oder Absperrelementes 20, insbesondere dem Austrittsquerschnitt, und/oder der Geschwindigkeit der Dosiereinrichtung 13, insbesondere des Transportbandes.

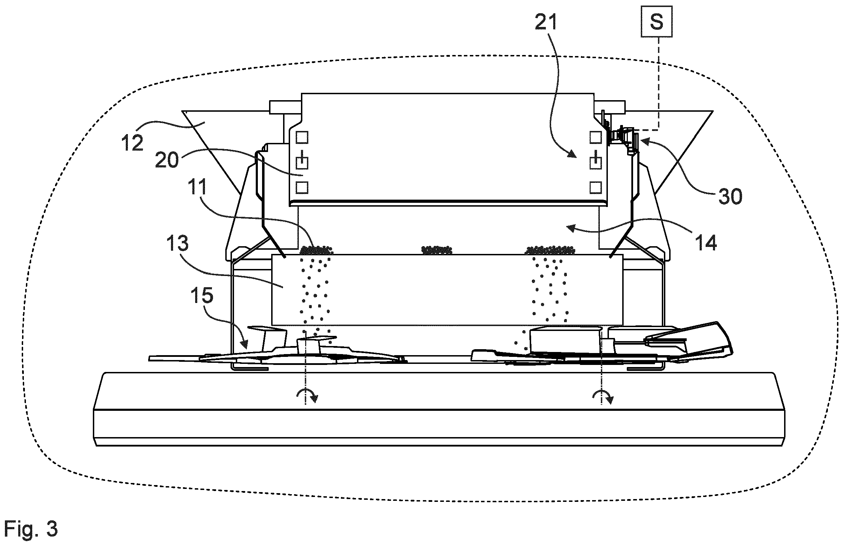

Eine weitere Position, insbesondere noch weiter geöffnete Stellung, des Dosier- und/oder Absperrelementes 20 ist in der Fig. 3 gezeigt. Der Austrittsquerschnitt ist hierbei zur Fig. 2 deutlich vergrößert, wobei somit eine größere Ausbringmenge an Streumittel 11 aus dem Vorratsbehälter 12 förderbar ist. Darüber hinaus ist ein vergrößerter Austrittsquerschnitt aufgrund von Blockaden und/oder Verstopfungen, insbesondere bei Streumittel 11 das sich besonders leicht verklumpt, besonders sinnvoll.

Die Position, insbesondere die Stellung, des Dosier- und/oder Absperrelementes 20 ist bevorzugt manuell von einem Bediener der Verteilmaschine 10 einstellbar, wobei das Dosier- und/oder Absperrelement 20 in zumindest zwei unterschiedlichen, vorzugsweise vordefinierten, Positionen montierbar ist. Hierzu umfasst das Dosier- und/oder Absperrelement 20 und/oder die Verteilmaschine10, insbesondere im Bereich des Vorratsbehälters 12, zumindest eine Arretierung 21. Die Arretierung 21 umfasst zumindest einen Ausschnitt der an dem Dosier- und/oder Absperrelement 20 und zumindest ein Arretierungselement das an der Verteilmaschine 10, insbesondere im Bereich des Vorratsbehälters 12, angeordnet ist.

Alternativ oder zusätzlich ist das Dosier- und/oder Absperrelement 20, insbesondere zur vollständigen Öffnung der Austrittsöffnung 14 um eine im Wesentlichen horizontale Achse verschwenkbar, so dass das Dosier- und/oder Absperrelement 20 aufklappbar ist.

Das Dosier- und/oder Absperrelement 20 ist im gezeigten Ausführungsbeispiel als ein manuell verstellbares Lochblech ausgebildet, wobei alternativ oder zusätzlich ein in zumindest einer Führung verschiebbares Schieberblech denkbar ist.

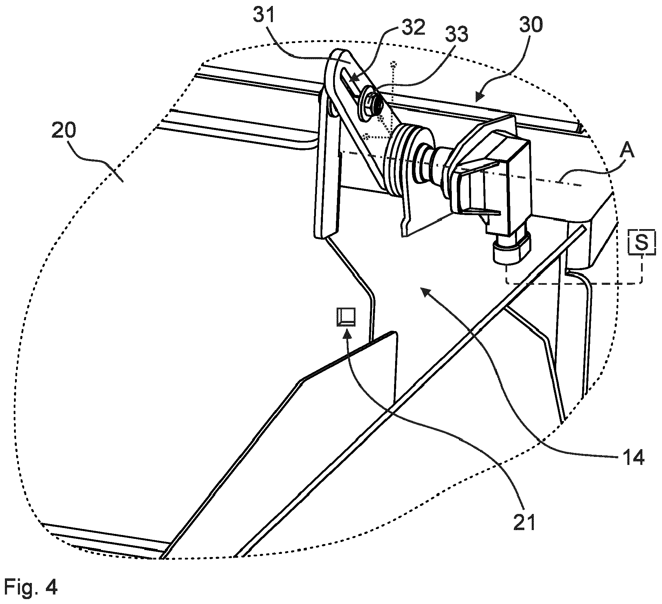

Die Sensoreinrichtung 30 umfasst zumindest einen Positionsgeber, insbesondere Drehwinkelsensor, der in der Fig. 4 gezeigt ist. Die Sensoreinrichtung 30 ist mit dem Dosier- und/oder Absperrelement 20 gekoppelt und dazu eingerichtet, die Position, insbesondere die Stellung, des Dosier- und/oder Absperrelementes 20 zu erfassen. Hierzu ist dem Dosier- und/oder Absperrelement 20 ein Bewegungswandler 33 und der Sensoreinrichtung 30, insbesondere dem Drehwinkelsensor, ein Führungsglied 31 mit einer darin angeordneten Führungsbahn 32 zugeordnet. Der Bewegungswandler 33 ist hierbei als eine mit dem Dosier- und/oder Absperrelement 20 verbundene Schraube ausgebildet, wobei hierbei alternativ oder zusätzlich ein an dem Dosier- und/oder Absperrelement 20 angeformtes Stiftelement denkbar ist. Das Führungsglied 31 ist einseitig um eine horizontale Achse A drehbar gelagert, wobei die Achse A mit einer erfassbaren Drehachse der Sensoreinrichtung 30, insbesondere des Drehwinkelsensor, zumindest teilweise korrespondiert. In der gezeigten Ausführungsform ragt der Bewegungswandler 33 zumindest teilweise in die Führungsbahn 32 des Führungsgliedes 31, wobei eine im wesentlichen translatorische Bewegung des Dosier- und/oder Absperrelementes 20, insbesondere des Bewegungswandlers 33, zumindest teilweise in eine rotatorische Bewegung des Führungsgliedes 31, insbesondere um den Drehwinkelsensor 30, umgewandelt wird. In einer alternativen nicht gezeigten Ausführungsform sind das Führungsglied 31 an dem Dosier- und/oder Absperrelement 20 und der Bewegungswandler 33 an der Sensoreinrichtung 30 angeordnet.

Darüber hinaus ist eine Ausführungsform denkbar bei der das Dosier- und/oder Absperrelement 20 in Form eines Getriebes, insbesondere mit zumindest einem Hebelelement, mit der Sensoreinrichtung 30 gekoppelt ist. Des Weiteren ist hierbei zusätzlich eine Über- oder Untersetzung der Bewegung denkbar.

Die Sensoreinrichtung 30 ist dazu eingerichtet, eine von der Position, insbesondere Stellung, des Dosier- und/oder Absperrelementes 20 abhängiges Messsignal zu erzeugen, das vorzugsweise über eine Messsignalleitung an das Steuer- und/oder Regelsystem S übertragbar ist. Mittels des Steuer- und/oder Regelsystems S ist somit eine darauf hinterlegbare Voreinstellung der Verteilmaschine 10, in Abhängigkeit der Position des Dosier- und/oder Absperrelementes 20, vorzugsweise automatisiert, abrufbar. Des Weiteren ist eine an der Verteilmaschine 10 einstellbare Einstellung in Abhängigkeit einer abrufbaren Voreinstellung, vorzugsweise automatisiert, einstell- und/oder steuer- und/oder regelbar. Neben der Position des Dosier- und/oder Absperrelementes 20 ist zumindest eine Voreinstellung in Abhängigkeit der Streueinheit 15, insbesondere Streuscheibe, die an der Verteilmaschine 10 angeordnet ist abrufbar.

Die Streueinheit 15, insbesondere Streuscheibe, ist hierbei unterschiedlichen Typen, die insbesondere zumindest teilweise abhängig von der Streuscheibengröße und/oder der möglichen Abwurfweite sind, unterteilbar. Die Abwurfweite einer ersten Type einer Streueinheit 15, insbesondere Streuscheibe, kann hierbei beispielweise von zehn bis dreißig Meter und einer zweiten Type einer Streueinheit 15, insbesondere Streuscheibe, von zwanzig bis vierzig Meter reichen. Unter Berücksichtigung der Type der jeweiligen Streueinheit 15 ist somit die dazu zugeordnete Position des Dosier- und/oder Absperrelementes 20 von einem Bediener einstellbar.

Die Einstellungen der Verteilmaschine 10 die größtenteils manuell einstellbar sind, umfassen die Ausbringmenge des Streumittels 11 und/oder die Art, insbesondere die Dichte und/oder das Schüttgewicht, des Streumittels 11. Zumindest eine weitere Einstellung der Verteilmaschine 10, wie beispielsweise die Geschwindigkeit der Dosiereinrichtung 13 und/oder die Type der Streueinheit 15 und/oder die Geschwindigkeit der Verteilmaschine 10 in Fahrtrichtung F, sind in Abhängigkeit der abrufbaren Voreinstellungen abrufbar und/oder einstellbar. Insbesondere die Geschwindigkeit der Dosiereinrichtung 13 ist von der Position des Dosier- und/oder Absperrelementes 20 steuer- und/oder regelbar. Die Steuerung und/oder Regelung der Geschwindigkeit übernimmt hierbei das der Verteilmaschine 10 zugeordnete Steuer- und/oder Regelsystem S automatisiert in Abhängigkeit der einstellbaren Ausbringmenge des Streumittels 11. Alternativ oder zusätzlich ist eine manuelle Anpassung der Geschwindigkeit der Dosiereinrichtung 13 denkbar, bei der die Geschwindigkeit in Form eines Spektrums oder Geschwindigkeitsbereiches vorgewählt ist.

Des Weiteren berücksichtigt das Steuer- und/oder Regelsystem S alternativ oder zusätzlich, insbesondere mittels einer Erfassungseinrichtung, die Type der Streueinheit 15, insbesondere Streuscheibe, zur Steuerung und/oder Regelung der Geschwindigkeit der Dosiereinrichtung 13.

Alternativ oder zusätzlich sind darüber hinaus die Drehzahl der Streueinheit 15, insbesondere Streuscheibe, und/oder die Dosiermenge des Streumittels 11 das zur Streueinheit 15 förderbar ist als zumindest teilweise von dem Steuer- und/oder Regelsystem S abrufbare Voreinstellungen, vorzugsweise automatisiert, abrufbar und/oder einstellbar.

Die Voreinstellungen sind darüber hinaus alternativ oder zusätzlich als vorbestimmte Wertebereiche, insbesondere zwischen einem minimalen und maximalen Wert, abrufbar und/oder einstellbar, die vorzugsweise dem Bediener zumindest teilweise auf einem der Verteilmaschine 10 zugeordneten Anzeige- und/oder Eingabemittel darstellbar sind.

### Bezugszeichenliste

- 10: Verteilmaschine
- 11: Streumittel
- 12: Vorratsbehälter
- 13: Dosiereinrichtung, Transportband
- 14: Austrittsöffnung
- 15: Streueinheit, Streuscheiben
- 20: Dosier- und/oder Absperrelement
- 21: Arretierung
- 30: Sensoreinrichtung, Drehwinkelsensor
- 31: Führungsglied
- 32: Führungsbahn
- 33: Bewegungswandler, Schraube

- A: Achse
- F: Fahrtrichtung
- S: Steuer- und/oder Regelsystem
- Z: Zugfahrzeug

## Patentansprüche

1. Landwirtschaftliche Verteilmaschine (10), insbesondere Großflächenstreuer, zum Ausbringen von Streumittel (11), insbesondere Dünger und/oder Kalk, mit zumindest einem Steuer- und/oder Regelsystem (S) zum Steuern und/oder Regeln der landwirtschaftlichen Verteilmaschine (10) umfassend zumindest einen Vorratsbehälter (12) zur Bevorratung des Streumittels (11), zumindest eine einstellbare Dosiereinrichtung (13), insbesondere ein Transportband, die im unteren Bereich des Vorratsbehälters (12) antreibbar angeordnet und dazu eingerichtet ist, dass bevorratete Streumittel (11) mit wenigstens zwei unterschiedlichen Geschwindigkeiten durch wenigstens eine Austrittsöffnung (14) die in dem Vorratsbehälter (12) angeordnet ist, aus dem Vorratsbehälter (12) zumindest einer Streueinheit (15), insbesondere rotatorisch antreibbaren Streuscheibe, zuzuführen, und zumindest ein verstellbares Dosier- und/oder Absperrelement (20) das der zumindest einen Austrittsöffnung (14) zugeordnet ist und dazu eingerichtet ist, einen Austrittsquerschnitt der Austrittsöffnung (14) einzustellen, wobei die Position des zumindest einen Dosier- und/oder Absperrelementes (20) mittels zumindest einer Sensoreinrichtung (30) erfassbar ist, **dadurch gekennzeichnet, dass** zumindest eine Voreinstellung auf dem zumindest einen Steuer- und/oder Regelsystem (S) hinterlegbar und in Abhängigkeit der Position des Dosier- und/oder Absperrelementes (20), vorzugsweise automatisiert, abrufbar ist.

2. Verteilmaschine (10) nach Anspruch 1, **dadurch gekennzeichnet, dass** zumindest eine Einstellung der landwirtschaftlichen Verteilmaschine (10) in Abhängigkeit der zumindest einen Voreinstellung, vorzugsweise automatisiert, einstellbar und/oder steuerbar ist.

3. Verteilmaschine (10) nach zumindest einem der vorgenannten Ansprüche, **dadurch gekennzeichnet, dass** zumindest eine Voreinstellung in Abhängigkeit der zumindest einen Streueinheit (15), insbesondere Streuscheibe, vorzugsweise automatisiert, abrufbar ist.

4. Verteilmaschine (10) nach zumindest einem der vorgenannten Ansprüche, **dadurch gekennzeichnet, dass** das zumindest eine Dosier- und/oder Absperrelement (20) in zumindest zwei unterschiedlichen, vorzugsweise vordefinierten, Positionen montierbar ist.

5. Verteilmaschine (10) nach zumindest einem der vorgenannten Ansprüche, **dadurch gekennzeichnet, dass** die Sensoreinrichtung (30) zumindest einen Positionsgeber, insbesondere Drehwinkelsensor, umfasst.

6. Verteilmaschine (10) nach zumindest einem der vorgenannten Ansprüche, **dadurch gekennzeichnet, dass** dem zumindest einen Dosier- und/oder Absperrelement (20) zumindest ein Bewegungswandler (33) und der zumindest einen Sensoreinrichtung (30) zumindest ein Führungsglied (31) mit zumindest einer Führungsbahn (32) zugeordnet ist, wobei der Bewegungswandler (33) und das Führungsglied (31) dazu eingerichtet sind, eine Translationsbewegung in eine Rotationsbewegung umzuwandeln.

7. Verteilmaschine (10) nach zumindest einem der vorgenannten Ansprüche, **dadurch gekennzeichnet, dass** die Geschwindigkeit der zumindest einen Dosiereinrichtung (13) in Abhängigkeit der Position des zumindest einen Dosier- und/oder Absperrelementes (20), vorzugsweise automatisiert, steuer- und/oder regelbar ist.

8. Verteilmaschine (10) nach Anspruch 3, **dadurch gekennzeichnet, dass** die Geschwindigkeit der zumindest einen Dosiereinrichtung (13) in Abhängigkeit der zumindest einen Streueinheit (15), vorzugsweise automatisiert, steuer- und/oder regelbar ist.
